# EUROPEAN PATENT APPLICATION

(11) **EP 2 594 925 A1**
(43) Date of publication of application: **22.05.2013**
(21) Application number: 11189935.7
(22) Date of filing: 21.11.2011
(51) Int. Cl.: G01N 27/403, G01N 27/28

(54) **Vibration function for an electrode sensor**

(71) Applicant: Siemens Aktiengesellschaft, 80333 München (DE)
(72) Inventor: Sturm, Franz, 89343 Jettingen (DE)

(57) **Abstract**

The present invention relates to an electrode sensor arrangement (1) with a flow cell (2) and a measurement electrode (3) arranged in said flow cell (2) for measuring a parameter of a fluid (5) flowing in said flow cell (2). The present invention further relates to a method for measuring a parameter of a fluid (5) by an electrode sensor arrangement (1).

This inventive electrode sensor arrangement (1) further comprises a vibration device (6) to vibrate (10) said fluid (5) while said fluid (5) is flowing in said flow cell (2) to be measured by said measurement electrode (3).

This inventive method for measuring a parameter of a fluid (5) comprises vibrating (10) said fluid (5) while said fluid (5) is contacting a measurement electrode (3), especially a measurement surface (7) of said measurement electrode (3), of said electrode sensor arrangement (1) to be measured by said measurement electrode (3).

## Description

### TECHNICAL FIELD OF THE INVENTION AND PRIOR ART

The present invention relates to an electrode sensor arrangement with a flow cell and a measurement electrode arranged in said flow cell for measuring a parameter, especially a physical or chemical parameter, of a fluid flowing in said flow cell. The present invention further relates to a method for measuring a parameter, especially a physical or chemical parameter, of a fluid by an electrode sensor arrangement.

A sensor arrangement with a flow cell and measurement electrode arranged in said flow cell for measuring (a) physical and/or (a) chemical parameter(-s) of a fluid flowing in said flow cell, following referred as electrode sensor arrangement or just as electrode sensor, for example a chlorine electrode sensor used for a measurement of (free) chlorine, is known from "Produktblatt TARALine CS2.3" Reiss GmbH, "Operating Instructions CCS140/141 Sensors for free chlorine" Endress & Hauser, "Produktblatt/Data Sheet Type 202630" JUMO GmbH & Co KG as well as "Einbau und Betriebsanleitung - JUDO LIBELLE Doscon JLD-E", Judo Wasseraufbereitung (2009/2010).

These CCS140/141, JUMO 202630 and JLD-E chlorine electrode sensors comprise a flow block assembly/module with a chlorine sensor measuring electrode (measuring electrodes also referred as probes), specially a membrane probe (with an active measuring surface covered with a membrane), arranged in a flow cell located in said flow block assembly and being flushed with (sample) water to be controlled and an electronic module connected with said chlorine sensor measuring electrode, i.e. said probe, by wires controlling and operating the measurement of the (free) chlorine.

The flow block module, i.e. the flow cell arranged in the flow block module, will be flowed through/flushed by the (sample) water while said water being measured, i.e. while said physical and/or chemical parameter, e.g. said free chlorine (or ph-value, Redox-potential, hydrogen peroxide or peracetic acid), of said water being measured, in said flow cell said by said probe - with said water flowing into the flow block module, i.e. the flow cell, at a (sample) water inlet and flowing out of the flow block module, i.e. the flow cell, at a (sample) water outlet.

An analysis of water/fluid, i.e. said measurement of a physical and/or chemical parameter of a water/fluid, can be affected by air bubbles existing in said fluid with said air bubbles in said fluid will adhere at the probe, i.e. the active measuring surface, when said water/fluid is being analysed. Said adhering of said air bubbles at a probe will increase with a surface of said probe is being rough, like a surface of said membrane of a membrane electrode sensor.

Adhesive air bubbles can result in a loose of a measurement signal and/or a fluctuation of said measurement signal to be analysed in said electronic module.

Therefore, the analysis/measurement of the fluid is affected negatively by said air bubbles adhering at a probe - and could be unreliable. Therefore, operation and measurement of said electrode sensors could be unreliable.

Air bubbles in a water/fluid to be measured will accumulate especially in an installation phase of an electrode sensor as well as adverse mechanical designs of flow passes through an electrode sensor, e.g. narrowings of flow passes, can lead to an accumulation of air bubbles in said water/fluid to be measured.

To reduce the negative effect of said air bubbles and to increase the reliability of analysing a fluid by said electrode sensor a flow rate of said fluid flowing through said flow cell could be increased. But this solution results in a high waste of fluid and even energy, especially analysing warm or heated fluids.

Also an optimization in mechanical design of said electrode sensor, i.e. said flow cell and/or flow passes in said flow block/flow cell, can create a fluid flow with high velocity to prevent adhesive air bubbles at said probe. But with low flow rates as well as several probes are being arranged in said flow cell possibilities for said mechanical improvements are limited. As well as said mechanical design optimization could be cost-intensive and technically limited.

### SUMMARY OF THE INVENTION

It is a first objective of the invention to provide an electrode sensor, especially an electrode sensor with a membrane probe, and a method for measuring a fluid by said electrode sensor by which the above-mentioned shortcomings can be mitigated.

It is a further objective of the invention to provide an electrode sensor and a method for measuring a fluid by said electrode sensor which can operate and measure more reliably - and which will be more efficiently, fail-safely and economically.

These objectives are according to the invention achieved by providing an electrode sensor arrangement and a method for measuring a parameter, especially a physical or chemical parameter, of a fluid by an electrode sensor according the respective independent claim.

This electrode sensor arrangement comprises a flow cell with a measurement electrode to be arranged in said flow cell for measuring a parameter, especially a physical or chemical parameter, of a fluid, for example a (sample) water, flowing in said flow cell.

Said fluid flowing in said flow cell can mean flowing through said flow cell as well as being in said flow cell - to be analysed/measured by said measurement electrode.

This inventive electrode sensor arrangement further comprises a vibration device - arranged in/at said electrode sensor arrangement - to vibrate said fluid while said fluid is flowing in said flow cell to be measured, i.e. said physical or chemical parameter to be measured, by said measurement electrode.

The method for measuring a parameter, especially a physical or chemical parameter, of a fluid comprises a vibrating said fluid while said fluid is contacting a measurement electrode, especially a measurement surface of said measurement electrode, of said electrode sensor arrangement to be measured by said measurement electrode.

The invention based on the insight that said vibrating of said fluid will affect an (interply) adhesion, i.e. an adhesive force, at a contact, i.e. at a contact layer, between the fluid and the surface of said measurement electrode. With air bubbles adhering at the surface of said measurement electrode said vibrated fluid can - contacting said surface of said measurement electrode with said adhered air bubbles - disassociate said air bubbles from said surface more easily while said disassociated air bubbles can then be blown out of the flow cell by said fluid. As well as vibrating the fluid it would be more difficult for air bubbles in said fluid to adhere at said surface of said measurement electrode.

Therefore, said vibration of said fluid can affect said adhering of said air bubbles positively - leading to less or no air bubbles adhering at said measurement electrode, i.e. said measurement surface of said measurement electrode of said electrode sensor arrangement.

Therefore, operation and measurement/analysing a fluid by said inventive electrode sensor as well as said inventive method for measuring a fluid will be much more reliable - while a measurement signal will be more constant.

The invention provides a highly efficient, fail-safe and economical arrangement/method for measuring a parameter, especially a physical or chemical parameter, of a fluid, especially - with said fluid is (sample) water - for use in water treatment.

Preferred embodiments of the invention are also subject of dependent claims as well as will be also described in following.

In a preferred embodiment said vibration device is a vibration motor. Such a vibration motor, for example as known as for vibrating a cell/mobile phone, is highly proved and cheap. As well as such a vibration motor can be constructed very small.

In a further preferred embodiment said vibration device, e.g. said vibration motor, is arranged at said measurement electrode for vibrating said measurement electrode. While vibrating said measurement electrode said fluid - contacting said measurement electrode - will be vibrated at all by modifying said vibration from the vibrated measurement electrode on the fluid.

Particularly, since said flow cell comprises several measurement electrodes two or more of said measurement electrodes - or each of said several measurement electrodes - could be provided with said vibration device/function.

Alternatively, said vibration device, e.g. said vibration motor, can be arranged at said flow cell for vibrating said flow cell - modifying said vibration on the fluid.

In another preferred embodiment said electrode sensor arrangement comprises an electronic device, especially a microcontroller, for controlling said vibration device, especially for controlling duration, a period and/or an intensity of said vibrating. Such a microcontroller - proving said controlling functions is highly proved and cheap. As well as such a microcontroller can also be constructed very small.

Therefore, vibrating can be activated periodically at predetermined, variant or constant cycles (duty cycle) with predetermined constant or variant durations and/or intensities. Particularly, advanced prevention can be facilitated for installation phases, where an existence of air bubbles is much higher, with shorted duty cycles by higher intensities operated then.

Said period and/or said duration and/or said intensity can also be automatically adapted - especially depending on operating, technical and other functional, environmental parameters, like said installation phases or service, maintaining and/or calibrating phases. Especially in calibrating phases said measuring signals have to be highly reliable.

In a further preferred embodiment said vibrating can be controlled, i.e. started, stopped and/or adapted (e.g. duration, period, intensity adaptation) using said measurement signal of said measurement electrode. Especially, while analysing said measurement signal - for detecting abnormalities, like a loose of said signal or an abnormal fluctuation of said signal - caused by air bubbles adhering at said measurement electrode, i.e. said measurement surface, - said vibration can be controlled respectively, i.e. can be started, stopped and/or adapted respectively.

Said electronic device, i.e. said microcontroller, can be arranged inside said measurement electrode - being connected to the vibration device, i.e. vibration motor. Alternatively, said electronic device, i.e. said microcontroller, can also be arranged in an electronic module.

Such an electronic module, for example a measurement and control system, can further be equipped for controlling said electronic device, i.e. controlling said vibration device via said electronic device, for example via a service menu - while being connected to said electronic device with said electronic device being connected to said vibration device.

Said service menu can also provide said control functions, e.g. start, stop, adaption (duration, period, intensity), for an operator. Alarm functions as well can be provided by said electronic module, i.e. said measurement and control system, indication said vibration starting or stopping - as well as signal abnormalities/fluctuations and/or air bubbles adhering at said measurement electrode being detected.

In a preferred embodiment said measurement electrode is a membrane electrode. Especially, since said surface of such a membrane electrode is rough - with increasing adhesion of air bubbles at said surface therefore - it is highly advantageous to provide such membrane electrode sensor arrangement comprising such membrane electrodes with said vibration functionality according the invention.

Said measurement electrode can also be a chlorine electrode, especially for measuring a free chlorine concentration of said fluid, or a Redox-electrode, especially for measuring a Redox potential of said fluid, or a pH-electrode, especially for measuring a ph-value of said fluid, or a peracetic acid electrode, especially measuring a peracetic acid concentration of said fluid, or a hydrogen peroxide electrode, especially measuring hydrogen peroxide concentration of said fluid, - with such electrode sensor arrangements comprising such measurement electrodes being used in water treatment - and with said free chlorine concentration, said Redox potential, said ph-value, said peracetic acid concentration and said hydrogen peroxide concentration especially being said measured physical and/or chemical parameter.

Such electrode sensor arrangements comprising such measurement electrodes are known from "Produktblatt TARALine CS2.3" Reiss GmbH, "Operating Instructions CCS140/141 Sensors for free chlorine" Endress & Hauser, "Produktblatt/Data Sheet Type 202630" JUMO GmbK & Co KG as well as "Einbau und Betriebsanleitung - JUDO LIBELLE Doscon JLD-E", Judo Wasseraufbereitung (2009/2010).

Further advantages as well as advantageous features of the invention appear from the following description.

### BRIEF DESCRIPTION OF THE DRAWINGS

With reference to the appended drawings, below follow specific descriptions of embodiments of the invention cited as examples.

In the drawings:
- Figure 1: is a schematic illustration of an electrode sensor arrangement with a vibration function according to an embodiment of the invention and
- Figure 2: is a further schematic illustration of an electrode sensor arrangement with a vibration function according to a further embodiment of the invention.

### DETAILED DESCRIPTION OF EMBODIMENTS OF THE INVENTION

### VIBRATION FUNCTION FOR AN ELECTRODE SENSOR

The present examples are directed to an electrode sensor arrangement 1 (electrode sensor 1) with an chlorine electrode 3, also referred as probe 3, measuring a (free) chlorine concentration of (sample) water 5 - provided by a water circulation 26 - with said electrode sensor 1 provided with a vibration function.

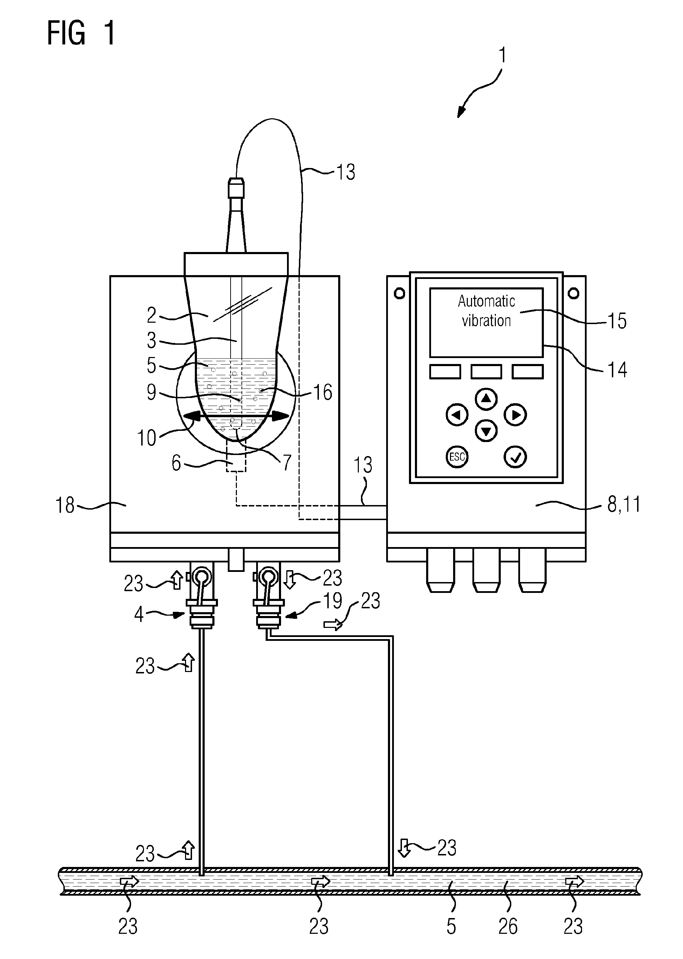

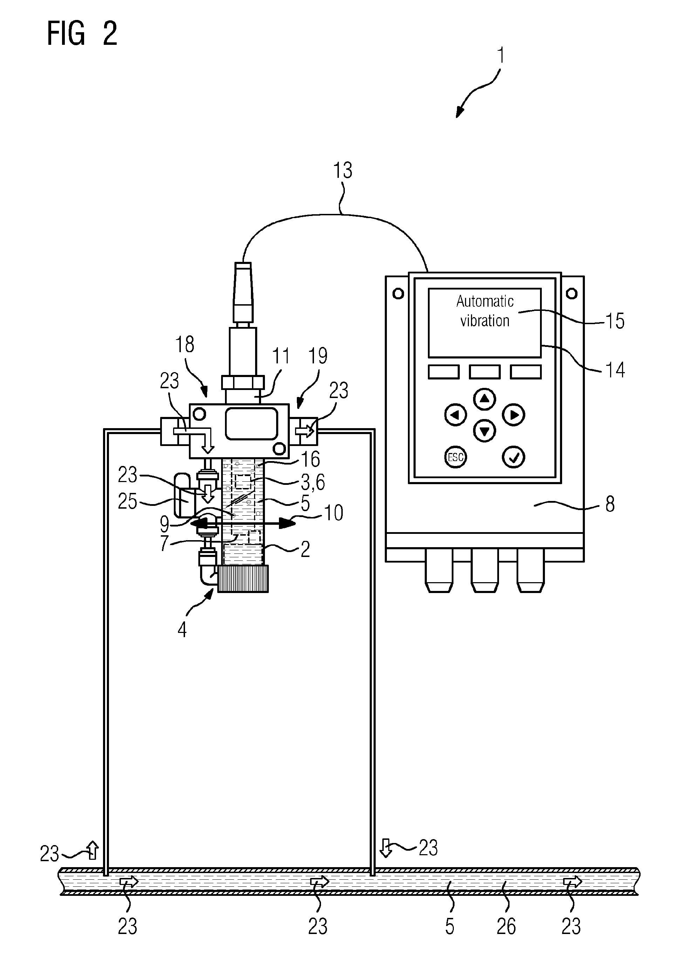

FIG 1 and FIG 2 show alternatives of proving said electrode sensor 1 with said vibration function while said vibration function is neither limited on said two alternatives nor on said chlorine electrode sensors 1. Same reference numbers refers to same elements in the figures.

These electrode sensor 1 shown in FIG 1 and FIG 2 comprise a flow block assembly/module 18 with said chlorine electrode 3, i.e. probe 3, arranged in a cell body/flow cell 2 located in said flow block assembly 18 and being flushed with said (sample) water 5 to be controlled, i.e. the chlorine concentration of said water 5 will be measured by said chlorine electrode 3, while said (sample) water 5 contacting a measurement surface 7 of said probe 3.

### Standard probe with flow cell vibration (FIG 1)

This electrode sensor 1 shown in FIG 1 further comprises an electronic module 8 equipped with measuring, analysing and controlling electronic 11, like microcontrollers, processors and software etc. (measurement and control system 8 with measurement and analysing electronic/software inside 11), connected with said chlorine electrode 3, i.e. said probe 3, by a wire 13 (or wireless, if a supply of said probe is realizable by batteries), and operating for controlling the measurement of the chlorine concentration of said water 5 - via a service menu 14 (displayed on a display 14) to be operated by an operator.

Said flow block module 18, i.e. said flow cell 2 arranged in the flow block module 18, is be flowed through/flushed by said (sample) water 5 with said water 5 flowing into the flow block module 18, i.e. the flow cell 2, at a (sample) water inlet 4 and flowing out of the flow block module 18, i.e. the flow cell 2, at a (sample) water outlet 19.

The (sample) water inlet 4 as well as the (sample) water outlet 19 are also connected to said water circulation 26 with said water 5 flowing there 23 to be controlled by said electrode sensor 1.

The water 5 of said water circulation 26 can flow 23 into said flow block assembly 18, i.e. into said cell body 2, via the (sample) water inlet 4 while said (sample) water 5 can flow out of the cell body 2, i.e. said flow block assembly 18, into said water circulation 26 via the (sample) water outlet 19.

The said (sample) water 5 is flowing (flow direction 23) through the said flow block assembly 18, i.e. an entering/leaving of said water 5 into/out of said flow block module 18, i.e. the cell body 2.

FIG 1 shows a small vibration motor 6 being arranged at said flow cell 2 for vibrating 10 said flow cell 2 while said vibration 10 of said flow cell 2 will be modified from said flow cell 2 to said water 5 contacting the measurement surface 7 of said probe 3 - while being measured by the probe 3.

The vibration motor 6 - being connected to said measurement and control system 8 by a wire 13 - is controlled by said measurement and control system 8.

With the operator operating the display menu item "automatic vibration" 15 - provided at the display 14 of the electronic module 8 - said vibration function could be controlled, while the flow cell vibration function could be adapted via said service menu 14, i.e. via a service menu item "automatic vibration" 15, to the process or application with several features, such as:
- adjustment of the period and duration (duty cycle) of the vibration 10,
- adjustment of a value (low alarm I) to start the vibration 10 if the probe 3 loose signal,
- adjustment of a value (low alarm II) to start the vibration 10 if the probe signal is fluctuating abnormally,
- advanced prevention for an installation phase, when an existence of air bubbles 9 is much higher,
- automatically adaption of period and duration,
- automatic modus with automatically starting, stopping, adapting the vibration 10.

While operating in said vibration function, i.e. operating said vibration 10, for example while automatically activating said vibration 10 periodically, said vibrating 10 of said water 5 will affect an (interply) adhesion, i.e. an adhesive force, at a contact between the water 5 and the measurement surface 7 of said probe 3. With air bubbles 9 adhering at the measurement surface 7 said vibrated water will - contacting said measurement surface 7 with adhered air bubbles 9 thereon - disassociate said air bubbles 9 from said measurement surface 7 more easily while said disassociated air bubbles 16 will be blown out of the flow cell 2 by said water 5. As well as vibrating 10 the water 5 it would be more difficult for air bubbles 9 to adhere at said probe 3, i.e. at said measurement surface 7 of said probe 3.

Therefore, said vibration 10 of said water 5 - via said vibration 10 of said flow cell 2 - can affect said adhering of said air bubbles 9 "positively" - leading to less or no air bubbles 9 adhering at said probe 3, i.e. said measurement surface 7 of said probe 3 of said electrode sensor 1.

Therefore, operation and measurement/analysing said water by said electrode sensor 1 can be much more reliable.

### Intelligent Probe with electronic and vibration inside (FIG 2)

FIG 2 shows said probe 3 - with said probe 3 comprising a measurement and analysing electronic inside 11 (intelligent probe 3 with inside electronic 11) and with said probe 3 being further equipped with said small vibration motor 6 arranged inside said probe 3.

Said vibration motor 3 - for vibrating 10 said probe 3 - is connected to said inside electronic 11 to be controlled by said inside electronic 11, with said vibration motor 3 and said inside electronic 11 being further connected via a wire 13 to said analysing and control system 8.

With the operator operating the display menu item "automatic vibration" 15 - provided at the display 14 of the electronic module 8 - said vibration function could be adapted via said service menu 14, i.e. via a service menu item "automatic vibration" 15, to the process or application with the known features, such as:
- adjustment of the period and duration (duty cycle) of the vibration 10,
- adjustment of a value (low alarm I) to start the vibration 10 if the probe 3 loose signal,
- adjustment of a value (low alarm II) to start the vibration 10 if the probe signal is fluctuating abnormally,
- advanced prevention for an installation phase, when an existence of air bubbles 9 is much higher,
- automatically adaption of period and duration,
- automatic modus with automatically starting, stopping, adapting the vibration 10.

While operating in said vibration function, i.e. operating said vibration 10, for example while automatically activating said vibration 10 periodically, said vibrating 10 of said water 5 - via said vibration 10 of said probe 3 - will affect an (interply) adhesion, i.e. an adhesive force, at the contact between the water 5 and the measurement surface 7 of said probe 3.

With air bubbles 9 adhering at the measurement surface 7 said vibrated water - contacting said measurement surface 7 with adhered air bubbles 9 thereon - will disassociate said air bubbles 9 from said measurement surface 7 more easily while said disassociated air bubbles 16 will be blown out of the flow cell 2 by said water 5. As well as vibrating 10 the water it would be more difficult for the air bubbles 9 to adhere at said probe 3, i.e. at said measurement surface 7 of said probe 3.

Therefore, said vibration 10 of said water 5 - via vibrating 10 the probe 3 - can affect said adhering of said air bubbles 9 "positively" - leading to less or no air bubbles 9 adhering at said probe 3, i.e. said measurement surface 7 of said probe 3 of said electrode sensor 1.

Therefore, operation and measurement/analysing said water by said electrode sensor 1 can also be much more reliable.

### Reference list

- 1: electrode sensor arrangement
- 2: flow cell, cell body
- 3: measuring electrode, chlorine electrode, probe
- 4: (sample) water inlet
- 5: fluid, (sample) water
- 6: vibration device, vibration motor
- 7: measurement surface of (3), active (measurement) array
- 8: electronic module with controlling/measuring software, analysis electronic, measurement and control system
- 9: (adhered) air bubbles
- 10: vibration (direction), vibrating
- 11: electronic device, microcontroller, measurement and analysing electronic inside, inside electronic
- 13: wire (electronic/functional connection)
- 14: service menu, display
- 15: display/servic menu item "automatic vibration"
- 16: disassociated air bubbles
- 18: flow block assembly/module
- 19: (sample) water outlet
- 23: flow direction
- 25: ball valve (closed/opened) manually
- 26: water circulation

## Claims

1. An electrode sensor arrangement (1) comprising
- a flow cell (2) with a measurement electrode (3) to be arranged in said flow cell (2) for measuring a parameter of a fluid (5) flowing in said flow cell (2) and
- a vibration device (6) to vibrate (10) said fluid (5) while said fluid (5) is flowing in said flow cell (2) to be measured by said measurement electrode (3).

2. An electrode sensor arrangement (1) according to any preceding claim wherein said vibration device (6) is a vibration motor.

3. An electrode sensor arrangement (1) according to any preceding claim wherein said vibration device (6) is arranged at said measurement electrode (3) for vibrating (10) said measurement electrode (3) or at said flow cell (2) for vibrating (10) said flow cell (2).

4. An electrode sensor arrangement (1) according to any preceding claim comprising an electronic device (11), especially a microcontroller, for controlling said vibration device (6), especially for controlling duration, a period and/or an intensity of said vibrating (10).

5. An electrode sensor arrangement (1) according to the preceding claim wherein said electronic device (11) is arranged inside said measurement electrode (3) or in an electronic module (8), especially said electronic device (11) is being controlled by said electronic module (8).

6. An electrode sensor arrangement (1) according to any preceding claim wherein said measurement electrode (3) is a membrane electrode and/or wherein said measurement electrode (3) is a chlorine electrode, especially for measuring a free chlorine concentration of said fluid (5), or a Redox-electrode, especially for measuring a Redox potential of said fluid (5), or a pH-electrode, especially for measuring a ph-value of said fluid (5), or a peracetic acid electrode, especially measuring a peracetic acid concentration of said fluid (5), or a hydrogen peroxide electrode, especially measuring hydrogen peroxide concentration of said fluid (5).

7. Method for measuring a parameter of a fluid (5) by an electrode sensor arrangement (1) comprising vibrating (10) said fluid (5) while said fluid (5) is contacting a measurement electrode (3), especially a measurement surface (7) of said measurement electrode (3), of said electrode sensor arrangement (1) to be measured by said measurement electrode (3).

8. Method for measuring a parameter of a fluid (5) according to any preceding method claim wherein said fluid is vibrated for a predetermined period and/or a predetermined duration and/or in a predetermined intensity.

9. Method for measuring a parameter of a fluid (5) according to any preceding method claim wherein said period and/or said duration and/or said intensity are/is automatically adapted.

10. Method for measuring a parameter of a fluid (5) according to any preceding method claim wherein said vibrating (10) is controlled using a measurement signal of said measurement electrode (3), especially analysing said measurement signal, and/or said vibrating (10) is started and/or stopped automatically using said measurement signal of said measurement electrode (3), especially using said analysing of said measurement signal.
